(19) **Europäisches Patentamt / European Patent Office / Office européen des brevets**

(11) **EP 4 230 473 A1**

(12) **DEMANDE DE BREVET EUROPEEN**

(43) Date de publication:
**23.08.2023 Bulletin 2023/34**

(21) Numéro de dépôt: **23154170.7**

(22) Date de dépôt: **31.01.2023**

(51) Classification Internationale des Brevets (IPC):
**B60L 53/51** (2019.01)   **B60L 53/52** (2019.01)
**B60L 53/63** (2019.01)   **B60L 53/64** (2019.01)
**H02J 7/00** (2006.01)

(52) Classification Coopérative des Brevets (CPC):
**B60L 53/63; B60L 53/51; B60L 53/52; B60L 53/64; H02J 7/0013;** H02J 2300/24

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **18.02.2022 FR 2201486**

(71) Demandeur: **Dream Energy**
**78110 Le Vésinet (FR)**

(72) Inventeur: **ALSALLOUM, Hala**
**78110 LE VÉSINET (FR)**

(74) Mandataire: **Demulsant, Xavier**
**Dejade & Biset**
**8 Avenue Jean Bart**
**95000 Cergy (FR)**

(54) **HIÉRARCHISATION DYNAMIQUE DES CONSOMMATIONS ÉLECTRIQUES AU SEIN D'UNE STATION DE RECHARGE POUR VÉHICULES ÉLECTRIQUES EN CHARGE LENTE ET RAPIDE EN FONCTION DE SOURCES D'ÉNERGIE RENOUVELABLE**

(57)      Procédé de hiérarchisation dynamique des consommations électriques d'un ensemble comprenant une unité de production d'énergie renouvelable, par exemple photovoltaïque (8), un bâtiment comprenant un espace de repos (4), un système de stockage d'énergie (5) et des bornes d'une station (2) de recharge de véhicules électriques. Le procédé divise la production électrique selon les priorités des participants (bâtiment, stockage, bornes de recharge) en optimisant les gains de production d'énergie renouvelable.

Fig.1

**Description**

L'invention a trait au domaine technique des stations de recharge de véhicules électriques.

Par véhicule électrique, on désigne ici en particulier les véhicules pourvus d'un moteur électrique et d'une batterie (*BEV, Battery electric vehicle*), les véhicules hybrides rechargeables, dotés d'un moteur à combustion interne et d'un moteur électrique, dont la batterie peut être rechargée par branchement à une source externe d'électricité (*PHEV, Pug-in hybrid electric vehicle*), les véhicules hybrides rechargeables à pile à combustible (*PHFCEV*), dotés d'une pile à combustible et dont la batterie peut se recharger directement sur une source d'alimentation en énergie externe. Les véhicules électriques peuvent être des véhicules particuliers, des véhicules utilitaires ou des véhicules de transport en commun, tels que des bus.

Le développement des véhicules électriques s'inscrit dans la transition énergétique, pour lutter contre le changement climatique. Le recours à l'électricité est un moyen de diversification du mix énergétique des transports, les rendant moins dépendants des énergies fossiles et réduisant les émissions de gaz à effet de serre. Le développement des véhicules électriques s'inscrit également dans la lutte contre les nuisances sonores et la préservation de la qualité de l'air dans les espaces urbains.

En France, les ventes de véhicules électriques ont fortement augmenté, passant de 187 véhicules électriques à batterie vendus en 2010 contre 109 000 en 2020. En Europe, selon le Comité des constructeurs français d'automobile, en 2018, près de 200 000 voitures particulières à motorisation électrique ont été immatriculées, représentant 1,4% du total des immatriculations. Dans le monde, selon France Stratégie, les ventes de véhicules électriques ont atteint 1.2 million d'unités en 2017, soit 1 .5% des ventes de voitures neuves. Selon la base de données ev-volumes, les ventes de véhicule électriques ont atteint 6.75 million d'unités en 2021, dont 71% de véhicules à batterie, et 29% de véhicules hybrides rechargeables.

Le marché mondial des véhicules électrique est actuellement concentré sur la Chine, pour 50% des immatriculations de véhicules neufs, et pour 40% dans sept autres pays (Etats-Unis, Japon, Norvège, Royaume-Uni, France, Allemagne, Suède). Plusieurs pays européens ont annoncé des objectifs d'arrêt de vente de véhicules thermiques neufs : les Pays-Bas (d'ici 2030), l'Ecosse (d'ici 2032), la France et le Royaume-Uni (d'ici 2040).

Le nombre de véhicules électriques en circulation en France reste très faible, de l'ordre de moins de 1% du parc automobile. Le nombre de véhicules électriques en circulation reste également très faible en Europe. Si 5% des véhicules en circulation en Norvège sont des véhicules électriques, les ventes en 2017 de véhicules électriques n'ont pas dépassé quelques centaines, voire quelques dizaines d'unités dans plus d'une quinzaine de pays de l'Union européenne.

La voiture électrique est une innovation disruptive et systémique. Disruptive parce qu'elle implique une modification radicale des produits et procédés de fabrication des véhicules, ainsi qu'un changement de l'expérience des utilisateurs. Systémique parce qu'elle nécessite la mise en place d'une infrastructure de recharge.

L'expérience du conducteur est profondément modifiée, avec la fin de l'embrayage et du levier de vitesses, la gestion de l'autonomie de la batterie, la récupération d'énergie lors du freinage. L'expérience de l'utilisateur est également modifiée pour la recharge des batteries, qui ne s'effectue plus seulement dans des stations-services, mais par exemple au domicile, sur le lieu de travail, ou encore sur un parking d'un restaurant, ou d'un lieu de loisir.

Plusieurs facteurs sont mis en avant pour expliquer la faible part de marché actuelle des véhicules électriques, en premier lieu le prix élevé et l'autonomie modeste des véhicules électriques, par rapport aux véhicules thermiques, et le temps de charge.

Les progrès récents des batteries lithium-ion ont permis une forte réduction des prix des batteries, et une augmentation de l'autonomie.

Le prix des batteries lithium-ion a ainsi chuté de 1000 USD par kilowattheure en 2010, à 209 USD par kilowattheure en 2017, et 156 USD par kilowattheure en 2019. Cette forte réduction du prix des batteries a permis une réduction importante du prix des véhicules : en 2010 la batterie représentait 66% du cout total d'un véhicule électrique.

Pour augmenter l'autonomie des véhicules électriques, les constructeurs ont augmenté l'énergie embarquée, en augmentant la taille du pack batterie ou en augmentant la densité d'énergie des batteries, qui peut atteindre aujourd'hui 60 kWh, et entre 80 kWh et 100 kWh dans certains modèles haut de gamme. L'autonomie des véhicules électriques varie selon le véhicule et les conditions de conduite, mais les densités d'énergie des batteries permettent dans tous les cas de rouler au moins 200 km, alors que la plupart des usages quotidiens des véhicules ne dépassent pas 100 km.

La recharge des batteries des véhicules électriques apparait aujourd'hui comme un élément critique.

L'échange de batterie est rarement proposé, les packs batterie n'étant pas standardisés entre les différents constructeurs.

La recharge par induction permet une charge sans contact, par couplage électromagnétique entre une inductance dans la station de recharge, et une inductance dans le véhicule. La recharge par induction n'est pas développée actuellement, les pertes énergétiques étant trop importantes.

La recharge rapide par conduction est actuellement la solution qui s'est imposée, un câble liant le véhicule à la borne de recharge. Le véhicule est immobilisé durant la charge. Pour la recharge par conduction, la plupart des constructeurs proposent les deux modes de recharge, AC (*Alternative Current*) et DC (*Direct Current*).

Dans la charge alternative AC, le véhicule est raccordé au réseau AC monophasé. Le chargeur est embarqué et sa puissance est limitée, de l'ordre de 10 kW, l'encombrement et le poids du redresseur étant restreints.

La charge alternative AC est lente, et est typiquement effectuée sur le lieu de résidence, à l'aide d'une prise domestique, ou sur le lieu de travail, par une borne privée (*wallbox*). Une prise domestique permet de recharger un pack de 60 kWh en une dizaine d'heures.

Ces charges lentes ne sont pas adaptées pour certains usages des véhicules : départ en vacances, livraison de marchandises, déplacements professionnels. Dans ces usages, la distance totale parcourue dépasse l'autonomie du véhicule, et la recharge du véhicule électrique est perçue comme plus contraignante que celle d'un véhicule à moteur à combustion interne. Le temps de recharge doit être abaissé vers des temps de pause acceptés par les utilisateurs, par exemple de 10 à 30 minutes.

Les charges rapides sont proposées par des stations de charge DC, le redresseur est placé dans une borne de recharge qui fournit le courant continu.

Des bornes de recharges sont proposées par de nombreux fabricants, par exemple ABB ® (Terra 53), DBT ® (Ultra charger), Cahors ® (Fasteo), Nexans ® (Agicity Fast), Siemens ® (Sicharge).

A ce jour, l'infrastructure de charge est multi-standard et les bornes de puissance inférieure à 50 kW représentent la majorité des installations.

Pour réduire les temps de charge, les constructeurs augmentent les puissances des chargeurs, de 100 kW à 400 kW, ce qui se traduit par des régimes de charge allant de 1.5C à 10C à l'échelle de la cellule de batterie. Les courants de charge sont toutefois limités par des mécanismes de fonctionnement des cellules, en particulier les effets thermiques et le vieillissement. Au-delà d'un certain régime, l'augmentation du courant de charge peut entraîner un réchauffement de la cellule plutôt qu'une réduction du temps de charge. La charge rapide peut entraîner une dégradation des cellules lithium-ion, par différents mécanismes, notamment le dépôt de lithium métallique (*lithium plating*), la dégradation de l'électrolyte par croissance d'une couche passive (*solid electrolyte interphase*), la dégradation mécanique des électrodes.

En juillet 2021, environ 4000 bornes de recharge haute puissance étaient installés en France, permettant une recharge en moins de 20 minutes. Les stations mises en place par les constructeurs automobiles et les compagnies pétrolières fournissent une offre de recharge rapide, en particulier sur les aires d'autoroutes.

Un réseau de bornes rapides interopérables dénommé Corri-Door a été proposé par la société Izivia ®.

Le consortium de constructeurs automobile Ionity ® indique avoir déployé 1500 bornes de recharge rapide, réparties dans près de 400 stations en Europe. Le document EP3762249 (Ionity, 2021) décrit une station de charge pour véhicules électriques, la station comprenant un affichage lumineux visible à distance, par exemple une dizaine de mètres, informant de l'avancement de la charge de la batterie du véhicule.

La société hollandaise Fastned ® a installé une dizaine de stations de recharge en France, sur aires d'autoroutes. Les stations comportent une marquise pourvue de panneaux photovoltaïques.

Les stations de charge rapide proposées par les sociétés Fastned ®, Ionity ®, Tesla ®, Total ® sont essentiellement installées sur les aires d'autoroute, ou éventuellement sur le domaine de sociétés partenaires (hôtels, restaurants, centres commerciaux). En France, toutes les aires de service du réseau autoroutier concédé en délégation du service public devant être équipées de stations de recharge pour véhicules électriques d'ici au 1er janvier 2023.

Les fabricants de bornes de recharge sont partenaires d'opérateurs d'infrastructure, qui assurent la pose, la mise en service et la maintenance préventive et corrective des bornes de recharge. Un opérateur de mobilité assure la supervision et le contact client. Ces opérateurs collectent les performances des bornes, assurent le pilotage de la recharge, la disponibilité et la réservation des bornes, et l'interopérabilité des réseaux de stations.

Par cette organisation, la station de recharge est pilotée de manière indépendante à son environnement. Dans cet esprit, de très nombreux systèmes de gestion d'installation de recharge de batteries de véhicules ont été proposés dans l'art antérieur. On peut se référer, par exemple, aux documents EP3825165 (Delta Electronics, 2021), EP3871307 (Crowd Charge, 2021), FR3103603 (EDF), FR3053506 (Omninov, 2018), FR3028987 (CEA), FR3008246 (Schneider), FR3001587 (IFPEN), EP2991854 (Nec Europe, 2016).

L'optimisation de la charge des véhicules électriques proposée dans l'art antérieur vise essentiellement la planification temporelle, pour éviter des problèmes de pics de puissance et de congestion dans le réseau. Des algorithmes d'optimisation ont été proposés pour la gestion de la charge de flottes de véhicules électriques. Une présentation de ces algorithmes est proposée par Houbbadi « *Optimisation multicritère de la gestion de la recharge d'une flotte de bus électriques* », 2020.

L'invention vise à permettre le pilotage d'une station de recharge de véhicules électriques, le pilotage tenant compte des attentes des utilisateurs des véhicules électriques, notamment en termes de charge lente ou rapide, le pilotage tenant compte d'autres besoins en énergie, par exemple ceux d'un bâtiment à usage commercial, touristique ou tertiaire, avantageusement situé à proximité de la station de recharge.

Un autre objet de l'invention est de permettre un tel pilotage lorsque la station de recharge est connectée à une source d'alimentation en énergie renouvelable, notamment photovoltaïque.

Un autre objet de l'invention est de permettre un tel pilotage et un stockage de l'énergie, en cas de surplus de production d'énergie.

Un autre objet de l'invention est de permettre un tel pilotage, assurant une alimentation en courant continu et en courant alternatif de bornes de la station, en minimisant les pertes de transformation du courant continu en courant alternatif et vice-versa.

Un autre objet de l'invention est de permettre un tel pilotage, maximisant les gains du producteur d'énergie renouvelable, en tenant compte du prix de vente de l'électricité aux bornes de recharge, et du prix du kWh pour les usages dans les bâtiments.

A ces fins, il est proposé, selon un premier aspect, un procédé de gestion dynamique des consommations électriques d'un ensemble comprenant une station de recharge pour véhicules électriques, et au moins un bâtiment, la station de recharge comprenant B bornes de recharge, l'ensemble étant alimenté par un flux d'énergie provenant d'une source comprenant un réseau électrique et au moins un moyen de production d'énergie renouvelable de puissance $E_p$, le procédé comprenant :

- une étape de réception des demandes de consommation électrique de chacune des B bornes de la station de recharge, et des V demandes de consommation du bâtiment, à un instant t, à une fréquence prédéterminée ;
- une étape de tri des demandes de consommation électrique de chaque borne i des B bornes de la station de recharge, dans un ordre décroissant ;
- une étape de calcul de la demande allouée d'énergie pour les bornes de la station de recharge ;
- une étape d'envoi du flux d'énergie $E_{i,t}$ vers chaque borne ides B bornes de la station de recharge ;
- une étape de comparaison entre la somme des demandes de consommation électrique de chacune des B bornes $\Sigma_B E_{i,t}$ et la puissance $E_p$ délivrée à un intervalle de temps t ;
- lorsque ladite somme $\Sigma_B E_{i,t}$ est inférieure à la puissance $E_p$, une étape de calcul de la demande allouée d'énergie pour le bâtiment ;
- une étape d'envoi du flux d'énergie vers le bâtiment.

Avantageusement, l'étape de calcul de la demande allouée d'énergie pour les bornes de la station de recharge tient compte du prix unitaire d'achat $P_{v,t}$ du kWh pour les véhicules électriques, et du gain de vente

$$P_{v,t} * \Sigma_B \ E_{i,t}$$

de l'énergie à la station de recharge.

Dans certaines mises en oeuvre, le moyen de production d'énergie renouvelable de puissance $E_p$ comprend des moyens de production d'énergie photovoltaïques.

Avantageusement, l'ensemble comprend un moyen de stockage d'énergie.

Dans certaines mises en oeuvre, le moyen de stockage d'énergie comprend une batterie x de puissance $P_t$, l'étape de calcul de la demande allouée d'énergie pour le bâtiment tenant compte du gain de consommation, entre une alimentation du bâtiment au réseau et une alimentation du bâtiment au moyen de production d'énergie renouvelable.

Avantageusement, le procédé comprend une étape de collecte de l'état de charge de la batterie x à une fréquence prédéterminée, et une étape de charge de la batterie avec une énergie allouée à l'instant tvalant $E_{x,t}$

Avantageusement, le bâtiment comprend j services généraux, l'énergie allouée au bâtiment à l'instant t valant $E_{j,t}$ le gain de consommation étant par exemple représenté par la valeur

$$ln \ (\Sigma_V \ E_{j,t} + \Sigma_{Ba} \ E_{x,t}).$$

Avantageusement, l'étape de charge de la batterie x tient compte du prix unitaire de vente $P_{g,t}$ du kWh au réseau, et du gain de vente de l'énergie au réseau, ce gain pouvant être estimé par la valeur

$$P_{g,t} * (E_p - \Sigma_B E_{i,t} - \Sigma_{Ba} E_{x,t} - \Sigma_V E_{j,t}).$$

Il est proposé, selon un deuxième aspect, un ensemble comprenant une station de recharge pour véhicules électriques, et au moins un bâtiment, la station de recharge comprenant B bornes de recharge, l'ensemble étant alimenté par un flux d'énergie provenant d'une source comprenant un réseau électrique g et au moins un moyen de production d'énergie renouvelable de puissance $E_p$, l'ensemble comprenant un dispositif de gestion dynamique des consommations électriques comprenant des moyens pour effectuer :

- une étape de réception des demandes de consommation électrique de chacune des $B$ bornes de la station de recharge, et des $V$ demandes de consommation du bâtiment, à un instant $t$, à une fréquence prédéterminée ;
- une étape de tri des demandes de consommation électrique de chaque borne $i$ des $B$ bornes de la station de recharge, dans un ordre décroissant ;
- une étape de calcul de la demande allouée d'énergie pour les bornes de la station de recharge ;
- une étape d'envoi du flux d'énergie $E_{i,t}$ vers chaque borne $i$ des $B$ bornes de la station de recharge ;
- une étape de comparaison entre la somme des demandes de consommation électrique de chacune des $B$ bornes $\Sigma_B\, E_{i,t}$ et la puissance $E_p$;
- lorsque ladite somme $\Sigma_B\, E_{i,t}$ est inférieure à la puissance $E_p$, à un intervalle de temps $t$, une étape de calcul de la demande allouée d'énergie pour le bâtiment ;
- une étape d'envoi du flux d'énergie vers le bâtiment.

Avantageusement, le moyen de production d'énergie renouvelable de puissance $E_p$ comprend des moyens de production d'énergie photovoltaïques.

Avantageusement, l'ensemble comprend un ou plusieurs moyen(s) de stockage d'énergie, par exemple une batterie $x$ de puissance $P_t$. Le dispositif de gestion dynamique des consommations électriques comprend des moyens pour effectuer une étape de collecte de l'état de charge de la batterie $x$ à une fréquence prédéterminée, et une étape de charge de la batterie avec une énergie allouée à l'instant $t$ valant $E_{x,t}$.

Avantageusement, le dispositif de gestion dynamique des consommations électriques comprend des compteurs intelligents connectés à chacune des bornes de recharge et au bâtiment, et un système de supervision distant.

D'autres objets et avantages de l'invention apparaîtront à la lumière de la description d'un mode de réalisation, faite ci-après en référence aux dessins annexés dans lesquels :

- la figure 1 est une représentation schématique d'un ensemble comprenant une station de recharge de véhicules électriques, un bâtiment, et un stockage d'énergie, cet ensemble étant alimenté en énergie par des sources comprenant un réseau électrique et un moyen de production d'énergie renouvelable, tel que des panneaux photovoltaïques ;
- la figure 2 est une représentation schématique du fonctionnement d'un dispositif de hiérarchisation dynamique des consommations d'électricité dans un ensemble représenté en figure 1;
- la figure 3 est une représentation schématique d'un moyen de pilotage, selon un mode de réalisation ;
- la figure 4 est une représentation d'une première phase des étapes d'un procédé de hiérarchisation dynamique des consommations d'électricité dans un ensemble représenté en figure 1 ;
- la figure 5 est une représentation d'une deuxième phase des étapes du procédé de la figure 4 ;
- la figure 6 est une représentation d'une troisième phase des étapes du procédé de la figure 4 et 5.

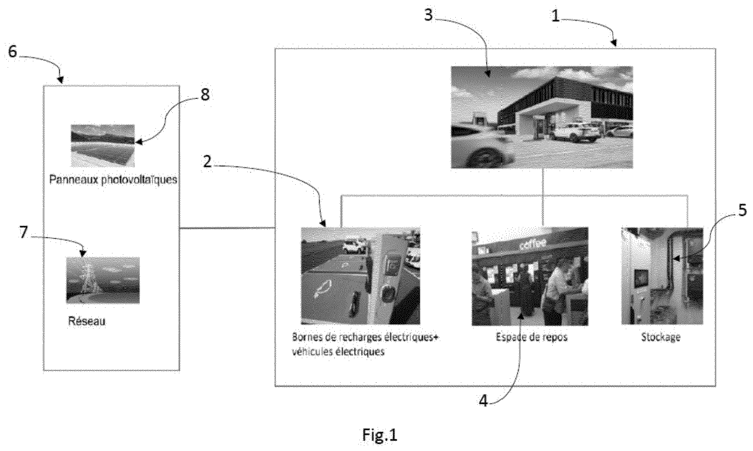

On se reporte tout d'abord à la figure 1.

L'ensemble 1 schématisé en figure 1 comprend une station 2 de recharge de véhicules électriques. La station 2 comprend au moins une borne de recharge.

Avantageusement, la station 2 comprend une pluralité de bornes de recharge.

Avantageusement, les bornes permettent une charge lente, et/ou accélérée, et/ou rapide et/ou ultrarapide. L'expression « et/ou » signifie ici qu'une borne permet au moins un type de charge, ou bien deux ou plus de deux types de charge.

Les expressions « charge lente », « charge accélérée », « charge rapide », « charge ultrarapide » sont utilisées en regard des temps de charge actuellement mis en oeuvre par les bornes de recharge commercialisées.

A titre indicatif, dans les charges AC lente, normale ou accélérée, 100% de l'énergie est récupérée, les temps de charge étant respectivement de plus de 12h, moins de 12h et moins de 5h.

A titre indicatif, dans les charges DC, avec une puissance allant de 50 kW DC à 350 kW DC, les bornes de recharge rapide permettent en environ 20 minutes de recharger à 80% une batterie vide. Au-delà, le courant de charge chute rapidement, et il faut compter ensuite 30 minutes supplémentaires pour atteindre les 20% restants.

A titre indicatif, une recharge DC ultrarapide permet une récupération d'énergie de 60%, avec un temps de charge de moins de 15 minutes.

Dans certaines mises en oeuvre, la station 2 comprend au moins une borne pour une charge AC, pourvue d'un connecteur de type 1, le connecteur étant conçu pour les réseaux monophasés et comprenant cinq broches (phase, neutre, terre, détection de proximité et contrôle pilote).

Dans certaines mises en oeuvre, la station 2 comprend au moins une borne pour une charge AC, pourvue d'un connecteur de type 2, le connecteur étant conçu pour les réseaux monophasé ou triphasé et comprenant deux broches supplémentaires par rapport au type 1, pour les deux autres phases.

Dans certaines mises en oeuvre, la station 2 comprend au moins une borne pour une charge DC, le connecteur étant un connecteur CCS (*Combined Charging System*) Combo 1 ou Combo 2, ou un connecteur CHAdeMO, ou un connecteur Tesla, ou un connecteur GB/T. Un connecteur Combo 1 est spécifié dans la norme SAE J1772 et un connecteur Combo 2 ou un connecteur CHAdeMO sont définis dans la norme EN 62196-2.

La station 2 comprend avantageusement au moins une borne permettant la charge DC à grande puissance, la puissance maximale étant à titre indicatif de l'ordre de 60 kW à 120 kW.

Avantageusement, la station 2 comprend des bornes de recharge de type AC et DC, permettant des recharges lentes et/ou accélérées, et/ou rapides, et/ou ultrarapides.

L'ensemble 1 comprend au moins un bâtiment 3. Dans la mise en oeuvre représentée, le bâtiment 3 comprend un établissement 4 recevant du public (ERP) ou du personnel.

Lorsque l'établissement 4 reçoit du public, l'accès à cet établissement est payant ou gratuit, l'accès à cet établissement étant libre, restreint, ou sur invitation.

L'établissement 4 est par exemple un espace de repos et de restauration, ou comprend au moins un espace de repos et de restauration.

L'établissement 4 permet avantageusement la délivrance de produits et services aux utilisateurs de la station 2 de recharge.

Dans une mise en oeuvre, l'établissement 4 est placé sur une aire de repos d'autoroute, à proximité d'une station 2 de recharge.

Dans d'autres mises en oeuvre, l'établissement 4 est un hôtel, un restaurant, un musée, une clinique ou un hôpital.

L'établissement 4 offre par exemple au public ou au personnel des prises de courant pour la recharge de terminaux mobiles (téléphones et smartphones, tablettes), la recharge d'ordinateurs, ou d'objets connectés tels que par exemple des montres connectées.

L'établissement 4 est consommateur d'énergie électrique, pour la délivrance de produits et/ou de services, ainsi que pour le confort des personnes. Dans certaines mises en oeuvre, l'établissement 4 est équipé de moyens de chauffage ou de climatisation au moins en partie alimentés en électricité.

Le bâtiment 3 comprend avantageusement des moyens de stockage 5 d'énergie. Les moyens de stockage 5 sont situés à l'intérieur du bâtiment 3, par exemple en sous-sol, ou à proximité du bâtiment, par exemple dans un local technique. Dans une mise en oeuvre, les moyens de stockage 5 d'énergie comportent des moyens de stockage d'électricité, par exemple au moins une batterie de type accumulateur monophasé ou triphasé.

En figure 1, les traits reliant le bâtiment 3 à la station 2, à l'établissement 4 et aux moyens 5 de stockage représentent les flux d'énergie.

L'ensemble 1 est alimenté en énergie par des sources 6. Dans le mode de réalisation représenté, les sources 6 comprennent un réseau 7 et une source d'énergie renouvelable 8.

Dans une mise en oeuvre, le réseau 7 est un réseau de distribution moyenne tension (20 kV) alimentant les petites et moyennes entreprises.

Dans des mises en oeuvre avantageuses, la source d'énergie renouvelable 8 comprend une source de production d'énergie solaire, par exemple de type photovoltaïque.

Dans une mise en oeuvre avantageuse, la station 2 est pourvue de panneaux photovoltaïques. Les panneaux sont par exemple de type silicium monocristallin, silicium polycristallin, ou silicium amorphe. Les panneaux sont avantageusement disposés sur un carport, une pergola, un auvent, une marquise ou une ombrière, ces éléments formant un abri au-dessus ou à proximité immédiate de la station 2, permettant aux utilisateurs de la station 2 d'être protégés du vent et de la pluie.

Les panneaux photovoltaïques sont avantageusement placés en toiture de l'abri, ou encore en façade. Dans certaines mises en oeuvre, le bâtiment 3 comprend également des panneaux photovoltaïques, ou d'autres moyens de production d'énergie renouvelable, par exemple éolienne.

En figure 1, le trait reliant les sources 6 à l'ensemble 1 représente les flux d'énergie.

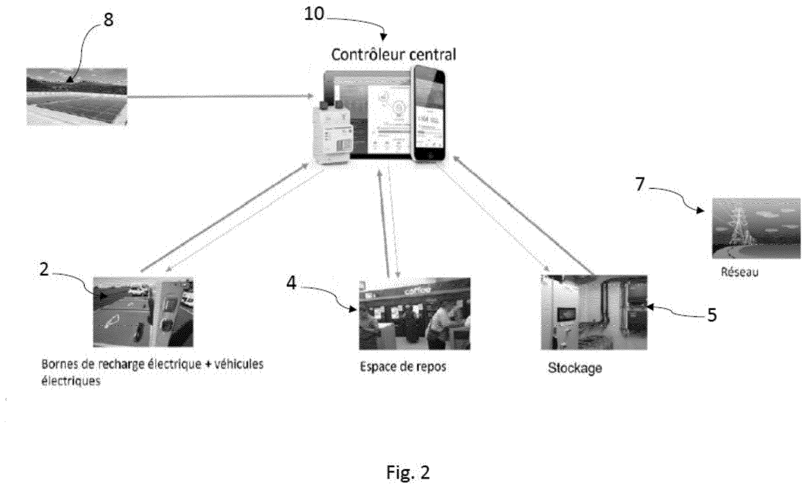

Ainsi qu'il apparait en figure 2, un contrôleur central 10 reçoit des informations en provenance de la station 2, de l'établissement 4, des moyens de stockage 5, et de la source d'énergie renouvelable 8. Ces flux d'information concernent la production et la consommation d'énergie.

Le contrôleur central 10 commande la distribution de l'énergie vers la station 2, l'établissement 4, les moyens de stockage 5, ou l'injection d'énergie dans le réseau 7.

Le fonctionnement électrique entre les différents acteurs (station 2, établissement 4, moyens de stockage 5) est contrôlé par un procédé et un dispositif de hiérarchisation dynamique.

Les objectifs de cette hiérarchisation sont avantageusement la minimisation des pertes électriques, la valorisation du kWh produit par la source 8 d'énergie renouvelable, la diminution des émissions de carbone par l'ensemble 1, le soulagement du réseau 7.

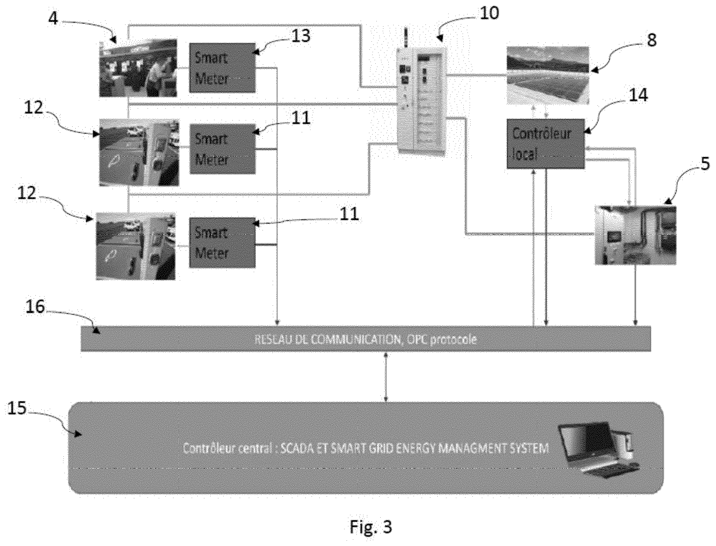

La figure 3 est une représentation schématique des moyens de contrôle mis en oeuvre, dans une réalisation.

Des contrôleurs intelligents 11 sont connectés aux bornes 12 de recharge électrique de la station 2. Par simplification, seules deux bornes 12 sont schématisées en figure 3.

Des contrôleurs intelligents 13 sont connectés à l'établissement 4.

Un contrôleur local 14 est connecté à la source 8 d'énergie renouvelable, comprenant par exemple des panneaux photovoltaïques. Le contrôleur local 14 est connecté au moyen de stockage d'énergie 5, tel qu'un accumulateur électrique.

Un système de supervision 15 communique, via un réseau 16, avec le contrôleur central 14, le moyen de stockage d'énergie 5, et les contrôleurs intelligents 11, 13.

Dans une mise en oeuvre, le réseau 16 utilise le protocole Modbus et le protocole OPC (*Open Platform Communication*).

Le système de supervision 15 comprend avantageusement un système de contrôle et d'acquisition de données en temps réel (SCADA *Supervisory Control And Data Acquisition).*

Dans une mise en oeuvre, le système de supervision 15 est distant.

Avantageusement, le système de supervision 15 est exécuté sur un micro-ordinateur.

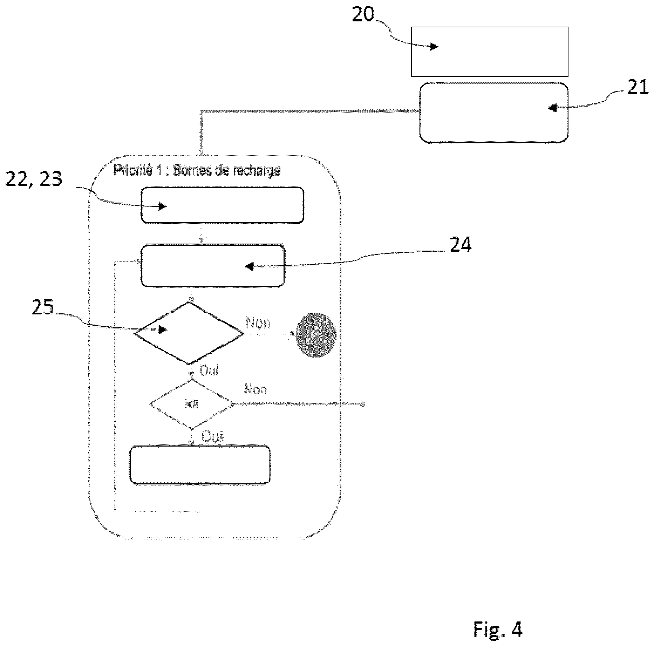

Les figures 4 à 6 illustrent les étapes d'un procédé de hiérarchisation dynamique des consommations électriques, selon une mise en oeuvre.

Dans une première étape 20, les demandes de consommation sont reçues, à une fréquence prédéterminée, par exemple toutes les cinq minutes.

Les demandes de consommation sont rangées suivant un paramètre de priorité *Imp.*

Dans le mode de réalisation représenté, une valeur 1 est donnée au paramètre *Imp* pour l'alimentation des bornes de la station 2, une valeur 2 est donnée au paramètre *Imp* pour l'alimentation électrique de l'établissement 4, et une valeur 3 est donnée au paramètre *Imp* pour l'alimentation des moyens de stockage d'énergie 5.

Cet ordre de priorité est donné à titre d'exemple.

Cet ordre de priorité permet de délivrer de l'électricité en priorité aux véhicules électriques, dont le développement est fortement incité par les pouvoirs publics, notamment en France (*LTECV* Loi de transition énergétique pour la croissance verte, 2015-992 du 17 août 2015, *LOM* Loi d'orientation des mobilités, 2019-142 du 24 décembre 2019), et au sein de l'Union Européenne (directive 2014/94 AFID). Des incitations fiscales visent à accélérer l'achat de véhicules électriques (bonus/malus écologique, prime à la conversion).

Cet ordre de priorité permet de délivrer à l'établissement 4 de l'énergie verte, provenant de la source 8, par exemple photovoltaïque. Cette disposition répond aux dispositions du décret 2019-771 du 23 juillet 2019 relatif à la réduction de la consommation d'énergie finale dans les bâtiments à usage tertiaire.

Cet ordre de priorité permet, après avoir répondu aux besoins énergétiques des véhicules et des bâtiments, de bénéficier de la production des sources 8, l'excès d'énergie produite par rapport aux demandes étant avantageusement stocké dans les moyens de stockage 5. Avantageusement, les sources 8 sont de type photovoltaïque, et l'énergie électrique stockée dans des accumulateurs sera utilisée durant la nuit ou lors de période d'absence de soleil.

En figure 4 est représenté de manière schématique le procédé de fourniture d'énergie vers les bornes de la station 2.

Dans une étape 22, sont reçues les demandes de consommation électrique de chacune des B bornes de la station 2 de recharge, et des V demandes de consommation du bâtiment 3, à un instant t, à une fréquence prédéterminée, par exemple toutes les 5 minutes.

Dans une étape 23, un tri est effectué des demandes de consommation électrique de chaque borne *i* des B bornes de la station 2 de recharge, dans un ordre décroissant.

Dans une étape 24, un calcul de la demande allouée d'énergie est effectué pour les bornes de la station 2 de recharge.

Avantageusement, ce calcul est effectué en maximisant les gains de production d'énergie.

Dans une mise en oeuvre, la maximisation du gain de production d'énergie est représentée par l'objectif de maximiser la valeur $OP_{p,t}$ représentée par l'équation (1) suivante

$$OP_{p,t} = P_{g,t} * (E_p - \Sigma_B E_{i,t} - \Sigma_{Ba} E_{x,t} - \Sigma_V E_{j,t}) + ln (\Sigma_V E_{j,t} + \Sigma_{Ba} E_{x,t}) + P_{v,t} * \Sigma_B E_{i,t}$$

tel que $\Sigma_V E_{i,t} + \Sigma_B E_{j,t} + \Sigma_{Ba} E_{x,t} \leq E_p$

avec $E_{i,t} \geq 0$ ; $E_{j,t} \geq 0$ ; $E_{x,t} \geq 0$, quel que soit t

avec

| B | nombre de bornes de recharge dans la station 2 |
| V | nombre de postes de consommation dans l'établissement 4 |
| $P_t$ | puissance des batteries des moyens de stockage 5 |
| $B_a$ | nombre des batteries des moyens de stockage 5 |
| i | indice d'une borne de la station 2 |
| j | indice d'un poste de consommation de l'établissement 4 |
| t | indice d'un intervalle de temps |
| g | indice du réseau 7 |
| p | indice du producteur |
| x | indice d'une batterie des moyens de stockage 5 |
| $P_{v,t}$ | prix unitaire d'achat du kWh pour les véhicules électriques |
| $P_{g,t}$ | prix unitaire d'un kWh |
| $E_p$ | puissance des panneaux photovoltaïques installés |
| $E_{i,t}$ | énergie allouée à la borne i à un temps t |
| $E_{j,t}$ | énergie allouée à un établissement j à un temps t |
| $E_{x,t}$ | énergie allouée à la batterie x à un temps t. |

Le prix unitaire d'achat du kWh pour les véhicules électriques $P_{v,t}$ est supérieur au prix unitaire d'un kWh $P_{g,t}$.

A titre d'exemple, en France, le prix payé par les véhicules électriques est plus important (environ 30 centimes/kWh) que le prix du kWh pour les usages des bâtiments (environ 4 centimes/kWh), par exemple pour le chauffage, la ventilation, la climatisation, l'éclairage.

Dans l'équation (1), le gain de consommation locale de l'énergie renouvelable (par exemple photovoltaïque), dans les bâtiments de l'ensemble 1, par rapport à une alimentation au réseau, est représenté par le terme

$$ln \left( \Sigma_V \, E_{j,t} + \Sigma_{Ba} \, E_{x,t} \right).$$

Dans l'équation (1), le gain de vente de l'énergie aux véhicules électriques est représenté par le terme

$$P_{v,t} * \Sigma_B \, E_{i,t}.$$

Dans l'équation (1), le gain de vente de l'énergie au réseau 7 est représenté par le terme

$$P_{g,t} * \left( E_p - \Sigma_B \, E_{i,t} - \Sigma_{Ba} \, E_{x,t} - \Sigma_V \, E_{j,t} \right).$$

Dans une mise en oeuvre avantageuse, la maximisation de la valeur $OP_{p,t}$ représentée par l'équation (1) est obtenue par la méthode de points intérieurs, de type algorithme de Karmarkar, ou de type méthode de réduction de potentiel, ou encore de type méthode de la trajectoire centrale.

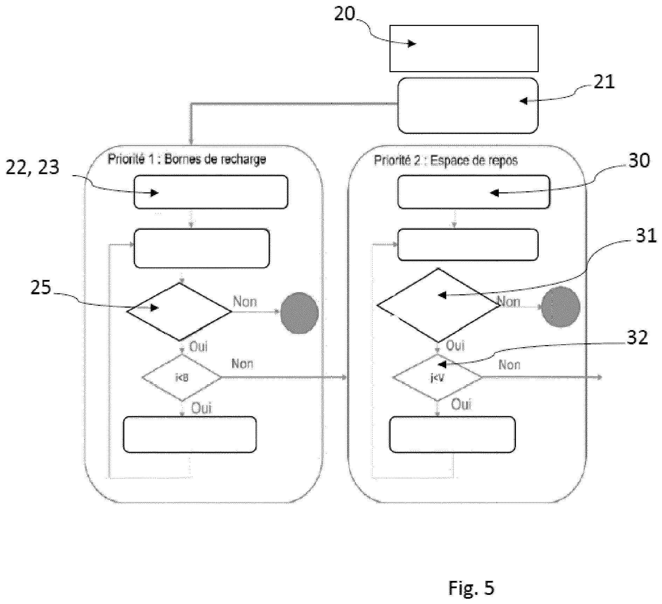

L'envoi du flux d'énergie est effectué dans chaque borne de la station 2, tant que la condition

$$\Sigma_B \, E_{i,t} < E_p$$

est respectée. Le test de cette condition est effectué dans une étape 25. Lorsque toutes les bornes ont été balayées par augmentation de l'indice i, (en d'autres termes lorsque la condition i > B est vérifiée, à l'étape suivante), une deuxième phase du procédé intervient, cette deuxième étape étant schématisée en figure 5.

Dans cette deuxième phase du procédé, une étape 30 de tri est effectuée des demandes de consommation électrique de chaque service j de l'établissement 4, dans un ordre décroissant.

Puis, une étape de calcul de la demande allouée d'énergie est effectuée.

Avantageusement, ce calcul est effectué en maximisant les gains de production d'énergie, selon l'équation (1) et les modalités présentées ci-dessus.

Une étape d'envoi du flux d'énergie vers chaque service j de l'établissement 4. Cet envoi est effectué tant que la condition

$$\Sigma_V\, E_{i,t}\, +\, \Sigma_B\, E_{i,t}\, \leq\, E_p$$

est respectée. Le test de cette condition est effectué dans une étape 31.

L'envoi du flux d'énergie est effectué vers chaque service *j* de l'établissement 4, tant que la condition

$$\Sigma_V\, E_{i,t}\, +\, \Sigma_B\, E_{i,t}\, \leq\, E_p$$

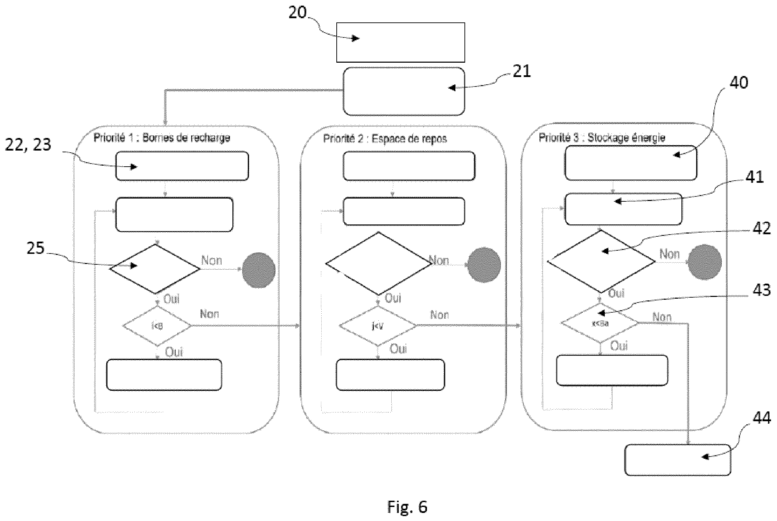

est respectée. Lorsque tous les services *j* ont été balayés par augmentation de l'indice *j*, (en d'autres termes lorsque la condition *j > V* est vérifiée, à l'étape 32), une troisième phase du procédé intervient, cette deuxième étape étant schématisée en figure 6.

Dans cette troisième phase, lors d'une première étape 40, les états de charge de chacune des batteries du moyen de stockage d'énergie 5 sont collectés, à une fréquence prédéterminée, par exemple toutes les cinq minutes.

Dans une étape 41, un calcul du flux d'énergie vers chacune des batteries du moyen de stockage d'énergie 5 est effectué. Avantageusement, ce calcul est effectué en maximisant les gains de production d'énergie, selon l'équation (1) et les modalités présentées ci-dessus.

Une étape d'envoi du flux d'énergie vers chaque batterie *x* du moyen de stockage d'énergie 5 est effectuée. Cet envoi est effectué tant que la condition

$$\Sigma_{Ba}\, E_{x,t}\, +\, \Sigma_V\, E_{j,t}\, +\, \Sigma_B\, E_{i,t}\, \leq\, E_p$$

est respectée. Le test de cette condition est effectué dans une étape 42.

L'envoi du flux d'énergie est effectué vers chaque batterie *x* du moyen de stockage d'énergie 5 est effectuée, tant que la condition

$$\Sigma_{Ba}\, E_{x,t}\, +\, \Sigma_V\, E_{j,t}\, +\, \Sigma_B\, E_{i,t}\, \leq\, E_p$$

est respectée. Lorsque toutes les batteries du moyen de stockage d'énergie 5 ont été balayées (en d'autres termes lorsque la condition

$$x\, >\, B_a$$

est respectée, à l'étape 43, par exemple $B_a$ = 1), une quatrième phase 44 du procédé intervient.

Dans cette quatrième phase 44, le surplus d'énergie électrique est envoyé vers le réseau 7. Avantageusement, une demande est envoyée au gestionnaire du réseau 7, avec un prix $P_{g,t}$.

Après accord du gestionnaire du réseau (et éventuellement paiement préalable du prix), le surplus d'énergie est envoyé au réseau 7, pour chacune de installations de la source 8.

L'invention présente de nombreux avantages.

Le procédé de distribution énergétique est avantageusement effectué sous forme d'un algorithme centralisé, et permet la distribution locale de l'énergie renouvelable produite, notamment photovoltaïque, et la communication avec le réseau 7 pour le surplus d'énergie.

Grâce à des automates intelligents, les données de consommations d'énergie à la station 2, dans l'établissement 4, sont connues à fréquence prédéterminée, par exemple toutes les 5 minutes.

Avec l'intelligence ajoutée à une automate, un algorithme centralisé permet la gestion de toutes les interactions complexes entre le producteur d'énergie verte et les consommateurs tels que les véhicules électriques, un espace de repos pour les conducteurs de véhicules, et un système de stockage.

Dans une mise en oeuvre avantageuse, pour les véhicules électriques, il est tenu compte d'une différence entre les bornes de recharge lente à courant alternatif et les bornes de recharge rapide à courant continu, pour chaque pas de temps. Avantageusement, les bornes de recharge à courant continu et recharge rapide ont une priorité plus élevée que les bornes de recharge lente.

Le procédé et l'installation permettent de diminuer les pertes des transformations du courant alternatif en courant continu et vice versa. En effet, les services de l'établissement 4 et les bornes de recharge lentes s'alimentent en courant alternatif, alors que les bornes de recharge rapide et les batteries des moyens 5 s'alimentent en courant continu.

Ainsi, avec les priorités données, le taux de perte des transformations du courant continu en courant alternatif sera réduit, puisque la production délivrée par les panneaux photovoltaïques in situ est effectuée en continu.

Avantageusement, le contrôleur central 10 calcule les flux énergétiques pour chaque consommation, et le contrôleur local 14, programmé sous trois niveaux de commande, s'occupera de l'envoi du flux.

Le procédé permet de maximiser les gains du producteur d'énergie renouvelable, tout en tenant compte des contraintes telles que la quantité d'énergie produite, le nombre de conversions / transformations entre courant alternatif et continu, et les contraintes temporelles.

L'algorithme centralisé assure la gestion d'énergie, entre une unité de production photovoltaïque, un bâtiment qui sert par exemple d'espace de repos pour les voyageurs, et un système de stockage lié à une station 2 de recharge de véhicule électrique, et des bornes de recharge électriques. L'algorithme divise la production électrique selon les priorités des participants (bâtiment, stockage, et bornes de recharge).

Avantageusement, le bâtiment, les bornes de recharge de la station 2 sont liés au réseau électrique général 7 et à l'unité de production 8 d'énergie renouvelable (par exemple photovoltaïque) qui alimente le tableau général basse tension TGBT.

Avantageusement, le procédé comprend une mesure de la production de l'unité de production d'énergie renouvelable, par exemple photovoltaïque. Lorsque la somme des valeurs de la puissance électrique fournie par l'unité de production d'énergie renouvelable dépasse la valeur totale des demandes, les consommations énergétiques sont classées par ordre décroissant.

Avantageusement, l'énergie envoyée vers les bornes de la station, le bâtiment 3 et les moyens de stockage 5 provient en premier lieu des moyens de production d'énergie renouvelable, par exemple photovoltaïque.

Ce n'est que lorsque la demande en électricité des bornes de la station 2 ou du bâtiment 3 sont supérieures à la production de la source d'énergie renouvelable 8 ou du stockage 5 qu'il est fait appel au réseau 7.

Avantageusement, un test est effectué, après chaque envoi du flux d'énergie, pour vérifier si la différence entre l'énergie produite et l'énergie consommée par les bornes de recharge de la station 2 et le bâtiment 3 est positive. Si tel est le cas, les moyens de stockage 5 sont alimentés.

Avantageusement, après avoir alimenté le maximum des bâtiments 3, des bornes de recharge de la station 2 et rechargé les batteries du moyen de stockage 5, le contrôleur calcule s'il existe un surplus d'énergie. Si ce surplus existe, il est proposé de le vendre au réseau, par exemple selon un prix imposé par les réglementations.

Par rapport au fonctionnement conventionnel des stations de recharge pour véhicules électriques, le procédé selon l'invention permet, toutes choses égales par ailleurs,

- une réduction des pertes énergétiques lors de la conversion de courant AC/DC,
- une réduction des factures énergétiques;
- une réduction des émissions de $CO_2$.

Une comparaison entre une installation selon l'invention et une installation conventionnelle a été effectuée à l'aide de l'outil HOMER *(Hybrid Optimization of Multiple Energy Ressources)*.

Les hypothèses de la simulation, pour une année de fonctionnement, sont les suivantes :

| | | |
|---|---|---|
| $E_p$ | puissance des panneaux photovoltaïques | 100 kW |
| $B$ | nombre de bornes de la station de recharge | 10 |
| $P_t$ | puissance de la batterie de stockage d'énergie | 50 kW |
| $\Sigma_B\,E$; | | 185 MW |

La production annuelle des panneaux photovoltaïques est de 164 MW, la consommation annuelle est de 204 MW.

La mise en oeuvre de l'invention permet, selon la simulation effectuée :

- une réduction de 37% des achats d'électricité au réseau (60 MW contre 96 MW dans un fonctionnement conventionnel) ;
- une réduction de 38% de la facture énergétique (2016 euros, contre 3115 euros dans un fonctionnement conventionnel) ;
- une réduction des émissions de $CO_2$ de 60% (9144 kg contre 22861 kg dans un fonctionnement conventionnel).

Le réseau électrique intelligent mis en oeuvre par l'invention intègre avantageusement les énergies renouvelables (énergie verte), les compteurs intelligents, les systèmes de stockage et les technologies d'information et de communication, afin de gérer, de manière intelligente et autonome, l'équilibre entre la demande et l'offre. Cette gestion intelligente permet une diminution des émissions de carbone, une minimisation du stress sur le réseau électrique, un stockage optimisé de l'énergie produite, une valorisation du kWh produit, une diminution des pertes énergétiques.

L'utilisation de centrales photovoltaïques comme sources d'énergie, permet de diminuer les émissions de carbone et de créer un écosystème écologique et vert.

L'utilisation de centrales photovoltaïques permet une minimisation du stress sur le réseau électrique, et la possibilité de stocker l'énergie produite pendant le jour pour l'utiliser ultérieurement.

Le procédé selon l'invention permet une valorisation du kWh produit par les centrales photovoltaïques, prenant en compte la nature intermittente de ces sources.

Dans une mise en oeuvre, la production d'énergie photovoltaïque sert à alimenter une consommation locale.

Dans une autre mise en oeuvre, la production d'énergie photovoltaïque sert à participer à l'autoconsommation collective, qui permet à un ou plusieurs producteurs et un ou plusieurs consommateurs, proches géographiquement (c'est-à-dire, dont les points de soutirage et d'injection sont situés en aval d'un même poste de transformation d'électricité de moyenne en basse tension), de se regrouper au sein d'une personne morale, pour organiser la consommation de l'électricité produite, ou de vendre son surplus au réseau électrique.

L'invention permet une gestion de la répartition d'énergie, de manière à augmenter l'utilisation de l'énergie verte, dans un système complexe, groupant les véhicules électriques, le stockage d'énergie, et la demande qu'elle soit de nature tertiaire, industrielle ou même résidentielle.

L'invention permet de partager d'énergie au niveau du marché de détail, en temps réel, en réagissant instantanément, dès la collecte des données des compteurs intelligents « *Smart Meters* », capables de suivre en détail, et souvent en temps réel, la consommation électrique d'un bâtiment, d'une entreprise ou d'un foyer.

Le pilotage énergétique permet de diminuer les pertes, par exemple celles par effet Joule ou de conversion/ transformation du courant continu en alternatif et vice versa.

Le pilotage énergétique permet de diminuer les pertes au niveau d'un onduleur, lorsque les panneaux photovoltaïques sont reliés à un TGBT (*Tableau Général de Basse Tension*), pour alimenter les bâtiments tertiaires, après avoir transformé le courant continu en alternatif par l'intermédiaire de l'onduleur.

Le pilotage énergétique permet de diminuer les pertes lors de la conversion du courant continu produit par des batteries électrochimiques, en courant alternatif pour l'alimentation des bâtiments. Pour l'alimentation des véhicules électriques en charge rapide, les batteries peuvent être directement branchées aux bornes de charge en continu.

La hiérarchisation dynamique du fonctionnement électrique entre les différents acteurs (bornes de recharge, bâtiments, stockage) assure la diminution des émissions de carbone et des pertes électriques, le soulagement du réseau, et la valorisation du kWh vert.

**Revendications**

1. Procédé de gestion dynamique des consommations électriques d'un ensemble (1) comprenant une station (2) de recharge pour véhicules électriques, et au moins un bâtiment (3), la station (2) de recharge comprenant $B$ bornes (12) de recharge, l'ensemble (1) étant alimenté par un flux d'énergie provenant d'une source comprenant un réseau (7) électrique $g$ et au moins un moyen (8) de production d'énergie renouvelable de puissance $E_p$, le procédé étant **caractérisé en ce qu'**il comprend :

   - une étape de réception des demandes de consommation électrique de chacune des $B$ bornes (12) de la station (2) de recharge, et des $V$ demandes de consommation du bâtiment (3), à un instant $t$, à une fréquence prédéterminée ;
   - une étape de tri des demandes de consommation électrique de chaque borne $i$ des B bornes (12) de la station (2) de recharge, dans un ordre décroissant ;
   - une étape de calcul de la demande allouée d'énergie pour les bornes (12) de la station (2) de recharge ;
   - une étape d'envoi du flux d'énergie $E_{i,t}$ vers chaque borne $i$ des $B$ bornes (12) de la station de recharge ;
   - une étape de comparaison entre la somme des demandes de consommation électrique de chacune des B bornes $\Sigma_B E_{i,t}$ et la puissance $E_p$ délivrée à un intervalle de temps t;
   - lorsque ladite somme $\Sigma_B E_{i,t}$ est inférieure à la puissance $E_p$, une étape de calcul de la demande allouée d'énergie pour le bâtiment (3);
   - une étape d'envoi du flux d'énergie vers le bâtiment (3).

2. Procédé selon la revendication 1, **caractérisé en ce que** l'étape de calcul de la demande allouée d'énergie pour les bornes (12) de la station (2) de recharge tient compte du prix unitaire d'achat Pv,t du kWh pour les véhicules électriques, et du gain de vente $P_{v,t} * \sum_B E_{i,t}$ de l'énergie à la station (2) de recharge.

3. Procédé selon la revendication 1 ou 2, **caractérisé en ce que** le moyen de production d'énergie renouvelable de puissance $E_p$ comprend des moyens de production d'énergie photovoltaïques.

4. Procédé selon l'une quelconque des revendications 1 à 3, **caractérisé en ce que** l'ensemble (1) comprenant un moyen de stockage d'énergie (5), le moyen de stockage d'énergie (5) comprenant une batterie x de puissance $P_t$, l'étape de calcul de la demande allouée d'énergie pour le bâtiment (3) tient compte du gain de consommation, entre une alimentation du bâtiment (3) au réseau (7) et une alimentation du bâtiment (3) au moyen de production d'énergie renouvelable (8).

5. Procédé selon la revendication 4, **caractérisé en ce qu'**il comprend une étape de collecte de l'état de charge de la batterie x à une fréquence prédéterminée, et une étape de charge de la batterie avec une énergie allouée à l'instant t valant $E_{x,t}$.

6. Procédé selon la revendication 5, **caractérisé en ce que** l'étape de charge de la batterie x tient compte du prix unitaire de vente Pg,t du kWh au réseau (7), et du gain de vente de l'énergie au réseau.

7. Ensemble (1) comprenant une station (2) de recharge pour véhicules électriques, et au moins un bâtiment (3), la station (2) de recharge comprenant B bornes (12) de recharge, l'ensemble (1) étant alimenté par un flux d'énergie provenant d'une source comprenant un réseau (7) électrique g et au moins un moyen de production d'énergie renouvelable (8) de puissance $E_p$, l'ensemble (1) étant **caractérisé en ce qu'**il comprend un dispositif de gestion dynamique des consommations électriques comprenant des moyens pour effectuer :

    - une étape de réception des demandes de consommation électrique de chacune des B bornes (12) de la station (2) de recharge, et des V demandes de consommation du bâtiment (3), à un instant *t,* à une fréquence prédéterminée ;
    - une étape de tri des demandes de consommation électrique de chaque borne *i* des B bornes (12) de la station (2) de recharge, dans un ordre décroissant ;
    - une étape de calcul de la demande allouée d'énergie pour les bornes (12) de la station (2) de recharge ;
    - une étape d'envoi du flux d'énergie $E_{i,t}$ vers chaque borne i des B bornes (12) de la station (2) de recharge ;
    - une étape de comparaison entre la somme des demandes de consommation électrique de chacune des B bornes $\Sigma_B E_{i,t}$ et la puissance $E_p$;
    - lorsque ladite somme $\Sigma_B E_{i,t}$ est inférieure à la puissance $E_p$ à un intervalle de temps *t,* une étape de calcul de la demande allouée d'énergie pour le bâtiment (3) ;
    - une étape d'envoi du flux d'énergie vers le bâtiment (3).

8. Ensemble selon la revendication 7, **caractérisé en ce que** le moyen de production d'énergie renouvelable (8) de puissance Ep comprend des moyens de production d'énergie photovoltaïques.

9. Ensemble selon la revendication 7 ou 8, **caractérisé en ce que** l'ensemble comprend un moyen de stockage d'énergie (5).

10. Ensemble selon la revendication 9, **caractérisé en ce que** le moyen de stockage d'énergie (5) comprend une batterie x de puissance Pt.

11. Ensemble selon la revendication 10, **caractérisé en ce que** le dispositif de gestion dynamique des consommations électriques comprend des moyens pour effectuer une étape de collecte de l'état de charge de la batterie x à une fréquence prédéterminée, et une étape de charge de la batterie avec une énergie allouée à l'instant t valant Ex,t .

12. Ensemble selon l'une quelconque des revendications 7 à 11, **caractérisé en ce que** le dispositif de gestion dynamique des consommations électriques comprend des compteurs intelligents connectés à chacune des bornes (12) de recharge et au bâtiment (3), et un système de supervision (15) distant.

Fig.1

**8**

**10**

Contrôleur central

**7**

Réseau

**2**

Bornes de recharge électrique + véhicules électriques

**4**

Espace de repos

**5**

Stockage

Fig. 2

EP 4 230 473 A1

Fig. 3

20

21

Priorité 1 : Bornes de recharge

22, 23

24

25

Non

Non

Oui

i<8

Oui

Fig. 4

20

21

22, 23

Priorité 1 : Bornes de recharge

Priorité 2 : Espace de repos

30

31

25

Non

Non

Oui

32

Non

i<8

Non

j<v

Non

Oui

Oui

Oui

Fig. 5

Fig. 6

Europäisches
Patentamt

European
Patent Office

Office européen
des brevets

# RAPPORT DE RECHERCHE EUROPEENNE

Numéro de la demande

EP 23 15 4170

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/017045 A1 (NESLER CLAY G [US] ET AL) 21 janvier 2010 (2010-01-21) <br> * alinéa [0024] – alinéa [0027]; figure 1 * <br> * alinéa [0032] * <br> * alinéa [0053] – alinéa [0059]; figure 6 * <br> ----- | 1-12 | INV. <br> B60L53/51 <br> B60L53/52 <br> B60L53/63 <br> B60L53/64 <br> H02J7/00 |
| X | LIU ZHAOXI ET AL: "Transactive Real-Time Electric Vehicle Charging Management for Commercial Buildings With PV On-Site Generation", <br> IEEE TRANSACTIONS ON SMART GRID, IEEE, USA, <br> vol. 10, no. 5, <br> 1 septembre 2019 (2019-09-01), pages 4939-4950, XP011741263, <br> ISSN: 1949-3053, DOI: 10.1109/TSG.2018.2871171 <br> [extrait le 2019-08-20] <br> * le document en entier * <br> ----- | 1-4,6-10 | |
| X | US 2011/276194 A1 (EMALFARB HAL A [US] ET AL) 10 novembre 2011 (2011-11-10) <br> * abrégé * <br> * alinéa [0005] * <br> * alinéa [0027] – alinéa [0041]; figures 1-2 * <br> ----- | 1-4,6-10 | DOMAINES TECHNIQUES RECHERCHES (IPC) <br> B60L <br> H02J |

Le présent rapport a été établi pour toutes les revendications

| Lieu de la recherche | Date d'achèvement de la recherche | Examinateur |
|---|---|---|
| La Haye | 5 juillet 2023 | Benedetti, Gabriele |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 23 15 4170**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**05-07-2023**

| Document brevet cité au rapport de recherche | Date de publication | Membre(s) de la famille de brevet(s) | Date de publication |
|---|---|---|---|
| US 2010017045 A1 | 21-01-2010 | US 2010017045 A1<br>WO 2010042550 A2 | 21-01-2010<br>15-04-2010 |
| US 2011276194 A1 | 10-11-2011 | US 2011276194 A1<br>WO 2012154936 A2 | 10-11-2011<br>15-11-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 3762249 A
- EP 3825165 A
- EP 3871307 A
- FR 3103603
- FR 3053506
- FR 3028987
- FR 3008246
- FR 3001587
- EP 2991854 A